# EUROPÄISCHE PATENTANMELDUNG

(11) **EP 4 015 295 A1**
(43) Veröffentlichungstag der Anmeldung: **22.06.2022**
(21) Anmeldenummer: 21206506.4
(22) Anmeldetag: 04.11.2021
(51) Int. Cl.: B60L 53/67, H02J 7/00

(54) **ANORDNUNG ZUR INTEGRATION IN EINE LADEVORRICHTUNG FÜR WENIGSTENS EIN ELEKTROFAHRZEUG**

(30) Priorität: 21.12.2020 DE 102020134458
(71) Anmelder: Innogy eMobility Solutions GmbH, 44139 Dortmund (DE)
(72) Erfinder: Saleh, Mohamed Fouad Abdou, 58099 Hagen (DE); Matschke, Andre, 48739 Legden (DE); Müller-Winterberg, Christian, 46282 Dorsten (DE)
(74) Vertreter: Gottschald Patentanwälte Partnerschaft mbB

(57) **Zusammenfassung**

Die Erfindung betrifft eine Anordnung (10) zur Integration in eine Ladevorrichtung (1) für wenigstens ein Elektrofahrzeug, aufweisend:
- wenigstens eine Leistungseinheit (20) für eine Bereitstellung eines elektrischen Ladestroms,
- wenigstens einen Ladepunkt (30),
- wenigstens eine Leiterplatte (40),
- wenigstens eine Schalteinheit (50), welche an der Leiterplatte (40) zum Schalten des bereitgestellten Ladestroms angeordnet ist,
wobei die wenigstens eine Schalteinheit (50) die wenigstens eine Leistungseinheit (20) mit dem wenigstens einen Ladepunkt (30) elektrisch verbindet, um den bereitgestellten Ladestrom an das Elektrofahrzeug zu übertragen.

## Beschreibung

Die vorliegende Erfindung betrifft eine Anordnung zur Integration in eine Ladevorrichtung für wenigstens ein Elektrofahrzeug. Ferner bezieht sich die Erfindung auf eine Ladevorrichtung und ein Verfahren zur Aufladung eines Elektrofahrzeuges.

Es ist aus dem Stand der Technik bekannt, dass Ladevorrichtungen, wie Gleichstromschnellladestationen (DC-Schnellladestationen), mit einer DCseitigen Nennleistung größer als 50 kW mit zwei oder mehr Ladepunkten ausgestattet werden. Um die Verfügbarkeit der Ladevorrichtung zu erhöhen, wird zudem ein paralleles Laden an den Ladepunkten der Ladevorrichtung ermöglicht. Für die Aufteilung der Leistung werden üblicherweise eine große Anzahl an DC Schützen verwendet, welche den Ladestrom schalten und auf diese Weise eine Verteilung des Ladestroms vornehmen können. Allerdings hat dieser herkömmliche Aufbau erhöhte technische Anforderungen, welche somit mit erhöhtem technischen Aufwand für die Herstellung, Montage und Wartung einhergehen. Ferner wird der technische Aufwand durch die Anzahl der Schalteinheiten, insbesondere Schütze, erhöht, da typischerweise pro Leistungsstrang eine Schalteinheit vorgesehen sein muss. Bspw. ergeben sich bei drei Leistungseinheiten und zwei Ladeausgängen typischerweise zwölf Schalteinheiten.

Es ist daher eine Aufgabe der vorliegenden Erfindung, die voranstehend beschriebenen Nachteile zumindest teilweise zu beheben. Insbesondere ist es Aufgabe der vorliegenden Erfindung, eine verbesserte Lösung für die Bereitstellung und Übertragung des Ladestroms vorzuschlagen.

Die voranstehende Aufgabe wird gelöst durch eine Anordnung mit den Merkmalen des Anspruchs 1 und durch eine Ladevorrichtung mit den Merkmalen des Anspruchs 11 sowie durch ein Verfahren mit den Merkmalen des Anspruchs 14. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Anordnung beschrieben sind, selbstverständlich auch im Zusammenhang mit der erfindungsgemäßen Ladevorrichtung sowie dem erfindungsgemäßen Verfahren, und jeweils umgekehrt, sodass bezüglich der Offenbarung zu den einzelnen Erfindungsaspekten stets wechselseitig Bezug genommen wird bzw. werden kann.

Die Aufgabe wird insbesondere gelöst durch eine Anordnung, insbesondere elektrische Schaltungsanordnung und/oder Baugruppe, zur Integration in eine, insbesondere stationäre, Ladevorrichtung, insbesondere Ladestation.

Die Ladevorrichtung kann zum Aufladen wenigstens eines Fahrzeuges, bevorzugt Elektrofahrzeuges, ausgeführt sein. Die erfindungsgemäße Anordnung kann bspw. als eine integrierte und/oder automatisiert fertigbare Baugruppe ausgebildet sein.

Die erfindungsgemäße Anordnung kann die folgenden Komponenten aufweisen:
- wenigstens einen ersten und zweiten Ladepunkt (insbesondere Ladeausgang oder _{"}Outlet" für die Ladevorrichtung), vorzugsweise jeweils zur elektrischen Kopplung mit einem Elektrofahrzeug für einen elektrischen Ladevorgang, insbesondere zur parallelen Aufladung der Elektrofahrzeuge,
- wenigstens eine erste (und ggf. eine zweite und/oder dritte und/oder weitere) Leistungseinheit für eine Bereitstellung einer elektrischen Ladeleistung, insbesondere für eine Bereitstellung eines elektrischen Ladestroms,
- eine (insbesondere leiterplattenbasierte) Schaltanordnung, insbesondere Schaltmatrix, welche wenigstens die erste Leistungseinheit (und/oder die zweite und/oder dritte und/oder weitere Leistungseinheit) mit den Ladepunkten verschaltet, um die bereitgestellte Ladeleistung, insbesondere den Ladestrom, für den Ladevorgang auf die Ladepunkte aufzuteilen.

Hierbei ist insbesondere vorgesehen, dass die erste Leistungseinheit (insbesondere über wenigstens eine elektrische Permanentverbindung der Schaltanordnung) mit dem ersten Ladepunkt verbunden ist, um die (durch die erste Leistungseinheit) bereitgestellte Ladeleistung fest dem ersten Ladepunkt zuzuteilen. Damit kann die erste Leistungseinheit auf den ersten Ladepunkt fest verbunden sein, und somit dem ersten Ladepunkt die (Lade-) Leistung der ersten Leistungseinheit ohne eine Schaltung einer Schalteinheit zur Verfügung gestellt werden. Somit kann der technische Aufwand für weitere Schalteinheiten reduziert werden.

Weiter kann vorgesehen sein, dass die erste Leistungseinheit (zusätzlich) über wenigstens eine Schalteinheit der Schaltanordnung mit dem zweiten Ladepunkt verbunden ist, um die (durch die erste Leistungseinheit) bereitgestellte Ladeleistung schaltbar dem zweiten Ladepunkt zuzuteilen.

Die Permanentverbindung ist vorteilhafterweise eine direkte Verbindung der ersten Leistungseinheit mit dem ersten Ladepunkt (und/oder auch wenigstens einer weiteren Leistungseinheit mit dem zugehörigen Ladepunkt). Es kann ferner ein Schalter wie ein Schütz zum Abschalten der Schaltanordnung nachgelagert am jeweiligen Ladepunkt außerhalb der Schaltanordnung vorgesehen sein. Damit kann nach Beendigung des Ladevorgangs z. B. ein Abschalten des Ladepunkts erfolgen. Die wenigstens eine Schalteinheit ist jeweils z. B. als ein Schütz oder Relais, insbesondere mit einer Stromtragfähigkeit von mindestens 200 A oder mindestens 400 A oder mindestens 500 A, wie ein 500 A Relais, ausgeführt. Erfindungsgemäß kann durch die Verwendung der Permanentverbindung der Vorteil erzielt werden, dass die Stromtragfähigkeit nur an eine der Leistungseinheiten angepasst sein muss. Damit ist eine Reduzierung der Stromtragfähigkeit für die Schalteinheiten möglich, es können also z. B. kleinere Relais als Schalteinheiten verwendet werden.

Die jeweilige Leistungseinheit stellt z. B. eine Ladeleistung von mindestens 20 kW oder mindestens 40 kW oder mindestens 60 kW bereit.

Durch eine intelligente Positionierung und Verschaltung der Schalteinheiten der Schaltanordnung kann ferner die benötigte Anzahl der Schalteinheiten minimiert werden. Typischerweise wird eine Schalteinheit pro Leistungsstrang in der Schaltanordnung benötigt. Bei drei Leistungseinheiten und zwei Ladepunkten ergeben sich daher typischerweise zwölf Schalter in der Schaltanordnung. Durch die Verwendung der Permanentverbindungen, also nicht schaltbaren Verbindungen der Schaltanordnung zwischen Leistungseinheit und Ladepunkt, bzw. durch die feste Zuteilung der Ladeleistung kann die Anzahl deutlich reduziert werden.

Es kann allgemeiner formuliert bei der Erfindung vorgesehen sein, dass die wenigstens eine Schalteinheit der Schaltanordnung die wenigstens eine Leistungseinheit mit dem wenigstens einen Ladepunkt elektrisch verbindet, um die bereitgestellte Ladeleistung und/oder den dadurch bereitgestellten Ladestrom an das Fahrzeug bzw. an das Elektrofahrzeug zu übertragen. Die Permanentverbindung kann hingegen als eine elektrische Verbindung definiert sein, die nicht schaltbar ausgeführt ist und/oder ohne den Einsatz von Schalteinheiten auskommt, also fest vorgesehen ist. Es kann optional vorgesehen sein, dass durch jeden der Ladepunkte selber noch ein Schalter vorgesehen ist, allerdings nicht durch die Schaltanordnung.

Die erfindungsgemäße Anordnung kann eine Leiterplatte aufweisen, an der die wenigstens eine Schalteinheit und/oder die Schaltanordnung angeordnet und/oder elektrisch leitend befestigt ist. Die Verwendung eines solchen Leiterplattendesigns hat insbesondere den Vorteil (bspw. gegenüber einer herkömmlichen Lösung, die als Schalteinheit ein Schütz verwendet), dass die technische Umsetzung einfacher ist, und der Aufwand für die Montage reduziert werden kann. Darüber hinaus besteht weniger Verbindungsaufwand, sodass diese Lösung auch weniger fehleranfällig ist.

Erfindungsgemäß kann es vorgesehen sein, dass die jeweilige Schalteinheit an der Leiterplatte angeordnet und/oder befestigt ist, also leiterplattenbasiert ausgebildet ist. Dies bedeutet insbesondere, dass der Ladestrom über wenigstens eine Leiterbahn der Leiterplatte an die Schalteinheit übertragen wird, und die Schalteinheit elektrisch leitend direkt mit der Leiterbahn verbunden sein kann, z. B. daran verlötet sein kann. Die Verwendung eines Schützes als Schalteinheit kann dagegen nicht leiterplattenbasiert sein, also das Schütz nicht auf einer Leiterplatte angeordnet sein, sodass der technische Aufwand herkömmlicherweise erhöht ist.

Die Schalteinheit ist z. B. eine leiterplattenbasierte Schalteinheit, insbesondere ein Leiterplattenrelais oder ein Leistungshalbleiterschalter oder dergleichen. Als Schalteinheit kann ferner auch ein Hochleistungsrelais verwendet werden. Als die wenigstens eine Schalteinheit können dabei auch mehrere Schalteinheiten vorgesehen sein, die eine leiterplattenbasierte Schaltmatrix ausbilden. Die leiterplattenbasierte Schaltmatrix kann dazu ausgeführt sein, eine hohe Isolationsfestigkeit für die Ladepunkte bereitzustellen.

Die erfindungsgemäße Anordnung kann dadurch zur Integration in die Ladevorrichtung ausgeführt sein, dass die Anordnung wenigstens ein Befestigungsmittel aufweist, um die Anordnung in einem Gehäuse der Ladevorrichtung anzubringen. Alternativ oder zusätzlich kann die erfindungsgemäße Anordnung wenigstens einen elektrischen Anschluss aufweisen, um mit einer Elektrik und/oder Elektronik der Ladevorrichtung elektrisch verbunden zu werden. Bspw. erfolgt eine elektrische Verbindung der wenigstens einen Leistungseinheit mit einer Energieversorgung der Ladevorrichtung, bspw. einer Wechselspannungsquelle.

Die Ladevorrichtung kann für wenigstens ein Elektrofahrzeug (auch kurz als Fahrzeug bezeichnet), also zur Aufladung des Elektrofahrzeuges, geeignet sein. Das Fahrzeug ist bspw. ein Elektrokraftfahrzeug mit einer Batterie zur Energieversorgung des Antriebs und/oder ein Personenkraftfahrzeug und/oder ein Lastkraftfahrzeug. Dabei kann die Ladevorrichtung ggf. auch für mehrere Elektrofahrzeuge gleichzeitig die Aufladung bereitstellen, wenn mehrere Ladepunkte vorgesehen sind. Falls die Aufladung parallel für unterschiedliche Elektrofahrzeuge über unterschiedliche Ladepunkte der Ladevorrichtung erfolgt, muss die verfügbare elektrische Leistung der wenigstens einen Leistungseinheit auf die Ladepunkte aufgeteilt werden. Hierzu kann die wenigstens eine Schalteinheit bzw. die Schaltanordnung eine Verteilung der elektrischen Leistung ermöglichen.

Die Bereitstellung der elektrischen Ladeleistung (also einer elektrischen Leistung) durch die wenigstens eine Leistungseinheit kann auch als eine Bereitstellung eines elektrischen Ladestroms verstanden werden bzw. eine solche umfassen. Ferner kann hierbei die Gesamtleistung der Leistungseinheit(en) auf die verfügbaren und aktivierten Ladepunkte aufgeteilt werden. Die jeweilige Leistungseinheit weist z. B. eine Leistung von mindestens 10 kW oder 20 kW oder 30 kW oder 50 kW oder 60 kW auf, welche insbesondere zur Gesamtleistung der Ladevorrichtung addiert werden. Ein Ladepunkt wird bspw. dadurch aktiviert, dass ein Benutzer den Ladepunkt mit dem Batteriesystem des Fahrzeuges elektrisch verbindet (z. B. über einen Ladestecker) und/oder sich an der Ladevorrichtung authentifiziert. Auf diese Weise kann der Ladevorgang gestartet werden, indem z. B. ein Schalter des Ladepunktes geschlossen wird. Das Batteriesystem des Fahrzeuges kann einen Akkumulator aufweisen, welcher mit Gleichstrom geladen wird.

Die Ladevorrichtung kann zum Gleichstromladen ausgebildet sein. Dabei kann der bereitgestellte Ladestrom als Gleichstrom über den Ladepunkt direkt in das Fahrzeug eingespeist werden. Die Leistungseinheit kann die für die Bereitstellung des elektrischen Ladestromes notwendige Energie z. B. aus dem Stromnetz und/oder aus Akkumulatoren der Ladevorrichtung (z. B. bei Solartankstellen) ziehen. Im Fahrzeug kann ein Batteriemanagementsystem vorgesehen sein, welches mit der Ladevorrichtung kommuniziert, um bspw. die Stromstärke des Ladestroms anzupassen und/oder den Ladevorgang (und damit auch den entsprechend dafür genutzten Ladepunkt) zu aktivieren und/oder zu deaktivieren. Der jeweilige Ladepunkt selbst kann hierzu ferner einen zur Schaltmatrix nachgeschalteten Schalter aufweisen. Die Leistungselektronik kann sich für das Gleichstromladen in der Ladevorrichtung befinden. Gleichstromladen ermöglicht wegen des externen Ladegerätes sehr hohe Ladeleistungen und kurze Ladezeiten, also das sogenannte Schnellladen.

Der Ladepunkt kann bspw. wenigstens oder genau zwei Anschlüsse umfassen, um einen Ladestecker der Ladevorrichtung mit dem Fahrzeug zu verbinden und/oder einen Ladestromkreis mit dem Fahrzeug zu schließen und/oder den Ladestrom an das Fahrzeug zu übertragen. Die Anschlüsse können elektrisch jeweils mit wenigstens einer Leiterbahn der Leiterplatte verbunden sein. Die Leiterbahn kann wiederum zu wenigstens einer der Schalteinheiten führen, welche ebenfalls an der Leiterplatte befestigt sein können. Ferner können die Ladepunkte jeweils die Anschlüsse in der Form von einem "+" und einem "-" -Anschluss aufweisen.

Des Weiteren kann vorgesehen sein, dass die wenigstens eine oder mehreren Leistungseinheit(en) jeweils eine Leistungselektronik, insbesondere einen Gleichrichter (d. h. AC/DC-Wandler), aufweist bzw. aufweisen, vorzugsweise um bei der Ladevorrichtung in der Form einer Gleichstromladestation den Ladestrom in der Form von Gleichstrom bereitzustellen. Damit kann aus einer Wechselspannungsquelle der für das Aufladen notwendige Gleichstrom direkt durch die Ladevorrichtung bereitgestellt werden.

Vorteilhafterweise ist es im Rahmen der Erfindung möglich, dass eine zweite Leistungseinheit vorgesehen ist, welche vorteilhafterweise über wenigstens eine weitere elektrische Permanentverbindung der Schaltanordnung mit dem zweiten Ladepunkt verbunden ist, um eine durch die zweite Leistungseinheit bereitgestellte Ladeleistung fest dem zweiten Ladepunkt zuzuteilen. Auch hierbei kann auf eine durch die Schaltanordnung schaltbare Verbindung zwischen dem zweiten Ladepunkt und der zweiten Leistungseinheit verzichtet werden, um den technischen Aufwand weiter zu reduzieren.

Außerdem kann es im Rahmen der Erfindung von Vorteil sein, dass als die wenigstens eine Schalteinheit mindestens oder genau zwei Schalteinheiten vorgesehen sind, welche den ersten Ladepunkt mit dem zweiten Ladepunkt verbinden, um die durch die erste Leistungseinheit bereitgestellte Ladeleistung schaltbar dem zweiten Ladepunkt zuzuteilen. Konkret kann dabei eine erste der Schalteinheiten einen Anschluss (bspw. den "+" -Anschluss) des ersten Ladepunkts mit einem korrespondierenden Anschluss (also bspw. dem "+" -Anschluss) des zweiten Ladepunkts verbinden. In entsprechender Weise kann die zweite der Schalteinheiten einen anderen Anschluss (bspw. den "-" -Anschluss) des ersten Ladepunkts mit einem korrespondierenden Anschluss (also bspw. dem "-" -Anschluss) des zweiten Ladepunkts verbinden. Um die Leistung auf dem ersten Ladepunkt zu erhöhen, insbesondere zu verdoppeln, kann dann über diese Schalteinheiten die zweite Leistungseinheit auf den ersten Ladepunkt zugeschaltet werden. Wenn der erste Ladepunkt nicht in Betrieb ist, kann zur Erhöhung und insbesondere Verdoppelung der Leistung auf dem zweiten Ladepunkt über diese Schalteinheiten die erste Leistungseinheit auf den zweiten Ladepunkt zugeschaltet werden.

Ferner kann im Rahmen der Erfindung vorgesehen sein, dass die zweite Leistungseinheit zusätzlich über die wenigstens eine Schalteinheit der Schaltanordnung mit dem ersten Ladepunkt verbunden ist, um die durch die zweite Leistungseinheit bereitgestellte Ladeleistung schaltbar dem ersten Ladepunkt zusätzlich zu der durch die erste Leistungseinheit bereitgestellten Ladeleistung zuzuteilen. Wenn bspw. der zweite Ladepunkt nicht in Betrieb ist, also nicht zur Aufladung verwendet wird, kann somit die Leistung der zweiten Leistungseinheit für die Aufladung an dem ersten Ladepunkt verwendet werden. Das hierzu notwendige Schalten der Schalteinheit kann bspw. durch eine Kontrollvorrichtung erfolgen.

Es kann weiter möglich sein, dass die wenigstens eine Schalteinheit der Schaltanordnung dazu ausgeführt ist, die durch die erste Leistungseinheit bereitgestellte Ladeleistung schaltbar dem zweiten Ladepunkt zusätzlich zur durch die zweite Leistungseinheit bereitgestellten Ladeleistung zuzuteilen. Wenn bspw. der erste Ladepunkt nicht in Betrieb ist, also nicht zur Aufladung verwendet wird, kann somit die Leistung der ersten Leistungseinheit für die Aufladung an dem zweiten Ladepunkt verwendet werden. Das hierzu notwendige Schalten der Schalteinheit kann bspw. durch eine Kontrollvorrichtung erfolgen.

Ferner ist es optional bei der Erfindung möglich, dass eine dritte Leistungseinheit vorgesehen ist, welche über wenigstens zwei weitere Schalteinheiten der Schaltanordnung mit dem ersten und zweiten Ladepunkt verbunden ist, um eine durch die dritte Leistungseinheit bereitgestellte Ladeleistung dem ersten Ladepunkt und zweiten Ladepunkt jeweils schaltbar und/oder variabel zuzuteilen. Somit kann variabel die Leistung am ersten und/oder zweiten Ladepunkt individuell erhöht werden.

Ferner kann es im Rahmen der Erfindung vorgesehen sein, dass mindestens drei oder mindestens vier oder mindestens fünf oder mindestens sechs Ladepunkte vorgesehen sind, wobei die Ladepunkte, insbesondere jeweils über wenigstens eine elektrische Permanentverbindung der Schaltanordnung, mit unterschiedlichen Leistungseinheiten verbunden sind, um die jeweils durch die Leistungseinheiten bereitgestellte Ladeleistung fest den jeweiligen Ladepunkten zuzuteilen. Durch die feste Zuweisung kann auf den Einsatz von zusätzlichen Schalteinheiten verzichtet werden.

Es kann weiter möglich sein, dass die Ladepunkte zum parallelen Aufladen mehrerer Elektrofahrzeuge vorgesehen sind, wobei die Schaltanordnung und insbesondere die wenigstens eine Schalteinheit dazu vorgesehen und/oder ausgebildet und/oder derart mit weiteren Schalteinheiten verschaltet ist, den bereitgestellten Ladestrom auf die Ladepunkte aufzuteilen. Bspw. kann die wenigstens eine Schalteinheit mehrere Schalteinheiten umfassen, sodass die Schaltanordnung als eine Schaltmatrix ausgeführt ist, um die Aufteilung zu ermöglichen. Ferner kann es vorgesehen sein, dass jede Schalteinheit der Schaltanordnung eine Umleitung des Ladestroms an unterschiedliche Ladepunkte ermöglicht.

Es kann des Weiteren möglich sein, dass mindestens zwei oder mindestens drei oder mindestens vier Schalteinheiten vorgesehen sind, um die Schaltanordnung in der Form einer Schaltmatrix zur Verteilung und Aufteilung der bereitgestellten Ladeleistung bzw. des bereitgestellten Ladestroms auszubilden. Die Schaltmatrix kann als eine GleichstromSchaltmatrix ausgeführt sein. Die Eingänge der Schaltmatrix können mit der wenigstens einen Leistungseinheit und die Ausgänge der Schaltmatrix mit dem wenigstens einen Ladepunkt verbunden sein.

Wenn mehrere Leistungseinheiten und mehrere Ladepunkte vorgesehen sind, kann mittels der Schaltmatrix eine Leistungseinheit einem beliebigen Ladepunkt der Ladevorrichtung zugeordnet sein. Bspw. kann die Schaltmatrix zwei oder drei Schalteinheiten pro Ladepunkt aufweisen. Im geschlossenen Zustand können diese Schalteinheiten und/oder kann die Schaltmatrix die Leistungseinheit mit einem beliebigen Ladepunkt verbinden. Hiermit ermöglicht die Schaltmatrix eine dynamische Leistungsverteilung zwischen den Ladepunkten in den Leistungsstufen der elektrischen Nennleistung der Leistungseinheiten. Nicht zum Laden benötigte Leistungseinheiten verbleiben dabei im ausgeschalteten Zustand, wodurch sich die Lebensdauer der Leistungseinheiten erhöht. Die gesamte elektrische Nennleistung der Ladevorrichtung, welche durch die Leistungseinheiten bereitgestellt wird, kann ggf. größer als 50 kW sein.

Optional kann es vorgesehen sein, dass mindestens zwei oder mindestens drei oder mindestens vier Ladepunkte vorgesehen sind, und/oder mindestens vier oder mindestens sechs oder mindestens acht Schalteinheiten eine Schaltmatrix ausbilden, um die bereitgestellte Ladeleistung bzw. den bereitgestellten Ladestrom zwischen den Ladepunkten durch eine dynamische elektrische Leistungsverteilung aufzuteilen. Je weniger Ladepunkte parallel für eine Aufladung verwendet werden, desto höher kann dabei die elektrische Leistung sein, welche über einen einzigen Ladepunkt abgegeben wird. Durch die Verteilung der elektrischen Leistung auf die Ladepunkte ergibt sich indessen eine verbesserte Verfügbarkeit der Ladevorrichtung.

Ein weiterer Vorteil kann im Rahmen der Erfindung erzielt werden, wenn die wenigstens eine Schalteinheit jeweils als Leiterplattenrelais ausgebildet ist. Bei mehreren Schalteinheiten der erfindungsgemäßen Anordnung kann entsprechend jede der Schalteinheiten als Leiterplattenrelais ausgebildet sein. Die direkte Befestigung der Schalteinheit auf der Leiterplatte ermöglicht eine einfachere und zuverlässigere Herstellung und Montage.

Bevorzugt kann im Rahmen der Erfindung vorgesehen sein, dass eine (insbesondere elektronische) Kontrollvorrichtung zur Ansteuerung der wenigstens einen Schalteinheit vorgesehen ist. Die Kontrollvorrichtung kann dazu ausgeführt sein, ein Schalten der wenigstens einen Schalteinheit unter Last zu vermeiden. Ferner kann die Schalteinheit jeweils als Wechselstromrelais (kurz: AC-Relais) ausgebildet sein. Die erfindungsgemäße Anordnung kann wenigstens einen Anschluss aufweisen, um die Leiterplatte bzw. die Schaltmatrix mit der Kontrollvorrichtung zu verbinden. Dies ermöglicht eine einfache Montage und geringe Herstellungskosten.

Die wenigstens eine Schalteinheit kann jeweils als ein AC-Relais ausgebildet sein, welches erfindungsgemäß dann allerdings für DC genutzt wird (also das Schalten des Ladestroms in der Form eines Gleichstroms). Beispielsweise weist der geschaltete Ladestrom eine Spannung i. H v. mindestens 1000 V auf. AC-Relais haben üblicherweise eine unzureichende Fähigkeit zur Lichtbogenlöschung. Daher kann hier vorteilhafterweise die Kontrollvorrichtung zum Einsatz kommen, um sicherzustellen, dass die Schalteinheit stromlos (also nicht bei Vorliegen eines Stromflusses durch die Schalteinheit bzw. nur ohne Last) geschaltet wird. Daher kann es vorgesehen sein, dass vor einem Schalten der Schalteinheit der Ladestrom zunächst heruntergeregelt wird, z. B. durch die Leistungseinheit, welche entsprechend von der Kontrollvorrichtung angesteuert werden kann. Auch kann eine Strommessung durch die Kontrollvorrichtung erfolgen, um sicherzustellen, dass die Schalteinheit ohne Stromfluss geschaltet wird. In diesem Zusammenhang kann von einer Überwachung der Schalteinheiten durch die Kontrollvorrichtung gesprochen werden.

Vorteilhafterweise kann im Rahmen der Erfindung vorgesehen sein, dass die Leiterplatte als eine Dickkupfer-Leiterplatte oder Inlay-Leiterplatte ausgebildet ist. Die Leiterplatte kann z. B. eine Lagenkupferstärke von mindestens 100 µm oder mindestens 200 µm oder mindestens 300 µm oder mindestens 400 µm aufweisen, um die Belastbarkeit für die hohen Ladeströme zu gewährleisten. Ferner kann eine Kupferstärke der Leiterbahnen der Leiterplatte von mindestens 1 mm oder mindestens 1,5 mm vorgesehen sein. Es kann eine Erhöhung des Querschnitts der ladestromführenden Leiterbahnen vorgesehen sein, um thermische Grenzwerte einzuhalten. In anderen Worten kann der Querschnitt der Leiterbahnen der Leiterplatte an den Ladestrom angepasst sein.

Beispielsweise kann es vorgesehen sein, dass mindestens zwei oder mindestens drei oder mindestens vier Ladepunkte vorgesehen sind, welche ferner galvanisch voneinander isoliert sein können, um eine parallele Aufladung von Elektrofahrzeugen bereitzustellen. Beispielsweise kann die wenigstens eine Schalteinheit jeweils dazu ausgeführt sein, diese galvanische Trennung zumindest teilweise bereitzustellen.

Nach einer weiteren Möglichkeit kann vorgesehen sein, dass die wenigstens eine Schalteinheit jeweils mindestens einen Spiegelkontakt zur Funktionsüberwachung der Schalteinheit aufweist. Damit kann eine dauerhafte Überprüfung der ordnungsgemäßen Funktion der Schalteinheiten erfolgen. Die Leiterplatte kann ggf. Anschlüsse aufweisen, über die eine Kontrollvorrichtung die Überprüfung durchführen kann.

Die Spulenkontakte der Schalteinheiten und ggf. die optionalen Spiegelkontakte der Schalteinheiten, insbesondere Leiterplattenrelais, können vorteilhafterweise über Leiterbahnen der Leiterplatte mit einer zentralen Anschlussstelle verbunden sein, welche insbesondere den Anschluss eines mehrpoligen Steckverbinders erlaubt. Hierdurch reduziert sich der händische Montageaufwand weiter.

Es kann weiter möglich sein, dass mehrere Leistungseinheiten vorgesehen sind, welche galvanisch voneinander isoliert sind. Dies ermöglicht einen sicheren parallelen Betrieb der Ladepunkte.

Gemäß einer vorteilhaften Weiterbildung der Erfindung kann vorgesehen sein, dass die wenigstens eine Schalteinheit eine Stromtragfähigkeit von mindestens 100 A oder mindestens 200 A aufweist. Die Stromtragfähigkeit von 200 A kann für eine Anwendung in einer DC-Schaltmatrix ausreichend sein. Wenn allerdings AC-Relais als Schalteinheit verwendet werden, kann bei unzureichender Fähigkeit zur Lichtbogenlöschung durch eine Kontrollvorrichtung sichergestellt werden, dass das Schalten der Schalteinheiten (bzw. AC-Relais) nur stromlos erfolgt. Damit lassen sich auch AC-Relais als Schalteinheiten für eine DC-Schaltmatrix verwenden.

Ebenfalls Gegenstand der Erfindung ist eine Ladevorrichtung, aufweisend eine erfindungsgemäße Anordnung. Damit bringt die erfindungsgemäße Ladevorrichtung die gleichen Vorteile mit sich, wie sie ausführlich mit Bezug auf eine erfindungsgemäße Anordnung beschrieben worden sind.

Die Ladevorrichtung kann mittels der Leistungseinheit(en) dazu ausgeführt sein, eine elektrische Nennleistung von mindestens 50 kW für eine Aufladung des wenigstens einen Elektrofahrzeuges bereitzustellen. Zur Aufteilung dieser Nennleistung können als der wenigstens eine Ladepunkt mindestens zwei oder mindestens drei Ladepunkte vorgesehen sein. Dabei kann durch die wenigstens eine Schalteinheit, insbesondere einer Schaltmatrix aus mehreren der Schalteinheiten, eine parallele Aufladung durch eine Aufteilung der Nennleistung auf die Ladepunkte erfolgen. Jeder der Ladepunkte kann galvanisch von den anderen Ladepunkten isoliert sein. Auch kann die Ladecharakteristik an den Ladepunkten unterschiedlich sein. Die Nennleistung kann von der wenigstens einen Leistungseinheit geliefert werden. Die Leistungseinheiten können dabei gleich ausgeführt und/oder dimensioniert sein.

Ein weiterer Vorteil kann im Rahmen der Erfindung erzielt werden, wenn die Ladevorrichtung als eine Gleichstromschnellladestation ausgebildet ist, insbesondere um ein Schnellladen durch den Ladestrom in der Form von Gleichstrom für das Elektrofahrzeug bereitzustellen. Die Gleichstromschnellladestation kann eine Leistung von mindestens 50 kW oder mindestens 100 kW oder mindestens 200 kW bereitstellen.

Des Weiteren ist es denkbar, dass die Ladevorrichtung als eine einzige stationäre Ladesäule ausgebildet ist, und mindestens zwei oder drei Leistungseinheiten aufweist, um den Ladestrom über mehrere der Schalteinheiten auf mindestens drei Ladepunkte zur parallelen Aufladung jeweiliger Elektrofahrzeuge an der Ladevorrichtung aufzuteilen, wobei die Schalteinheiten jeweils als Relais ausgebildet sein können und/oder unmittelbar mit der Leiterplatte elektrisch verbunden sind.

Ebenfalls Gegenstand der Erfindung ist ein Verfahren zur Aufladung wenigstens eines Fahrzeuges, insbesondere Elektrofahrzeuges, wobei die nachfolgenden Schritte durchgeführt werden, insbesondere nacheinander oder in beliebiger Reihenfolge, wobei die Schritte auch wiederholt durchgeführt werden können:
- Bereitstellen wenigstens eines ersten und zweiten Ladepunkts jeweils zur elektrischen Kopplung mit einem Elektrofahrzeug für einen elektrischen Ladevorgang,
   - Bereitstellen wenigstens einer ersten Leistungseinheit für eine Bereitstellung einer elektrischen Ladeleistung,
   - Bereitstellen einer (insbesondere elektrischen) Schaltanordnung, welche wenigstens die erste Leistungseinheit mit den (zumindest ersten und zweiten) Ladepunkten verschaltet, um die bereitgestellte Ladeleistung für den Ladevorgang auf die Ladepunkte aufzuteilen,
   - Durchführen einer Zuteilung der bereitgestellten Ladeleistung fest zu dem ersten Ladepunkt, insbesondere durch eine Kontrollvorrichtung,
   - Durchführen einer Zuteilung der bereitgestellten Ladeleistung schaltbar zu dem zweiten Ladepunkt, insbesondere durch die Kontrollvorrichtung.

Damit bringt das erfindungsgemäße Verfahren die gleichen Vorteile mit sich, wie sie ausführlich mit Bezug auf eine erfindungsgemäße Anordnung beschrieben worden sind. Zudem kann vorteilhafterweise eine erfindungsgemäße Anordnung durch das erfindungsgemäße Verfahren betrieben werden. Die Kontrollvorrichtung kann als eine elektronische Steuereinheit oder dergleichen ausgebildet sein.

Ferner kann es vorgesehen sein, dass eine Kontrollvorrichtung vorgesehen ist, welche die schaltbare Zuteilung dadurch initiiert, dass die Kontrollvorrichtung wenigstens eine Schalteinheit der Schaltanordnung schließt, wobei die Kontrollvorrichtung zur Deaktivierung der Zuteilung einen durch die erste oder sämtliche Leistungseinheit(en) bereitgestellten Ladestrom zunächst abschaltet und erst dann die Schalteinheit lastfrei öffnet. Die Abschaltung kann bspw. durch eine Herunterregelung des Ladestroms durch die Leistungseinheit erfolgen. Auf diese Weise wird gewährleistet, dass die wenigstens eine Schalteinheit nicht unter Last geschaltet wird. Zur zusätzlichen Absicherung kann ggf. noch zuvor eine Messung erfolgen, dass die Schalteinheit stromlos ist.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen jeweils schematisch:
- Fig. 1: eine erfindungsgemäße Anordnung,
- Fig. 2: eine erfindungsgemäße Anordnung in einer perspektivischen Darstellung,
- Fig. 3 - 5: jeweils eine erfindungsgemäße Anordnung.

In den nachfolgenden Figuren werden für die gleichen technischen Merkmale auch von unterschiedlichen Ausführungsbeispielen die identischen Bezugszeichen verwendet.

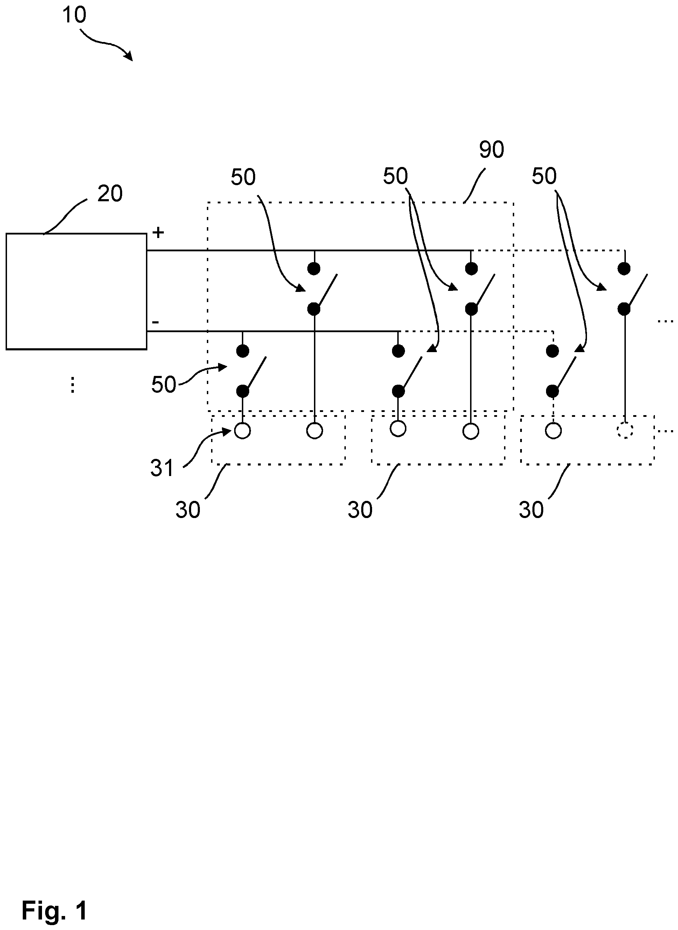

In den Figuren 1 bis 5 ist jeweils eine erfindungsgemäße Anordnung 10 zur Integration in eine Ladevorrichtung 1 für wenigstens ein Elektrofahrzeug gezeigt.

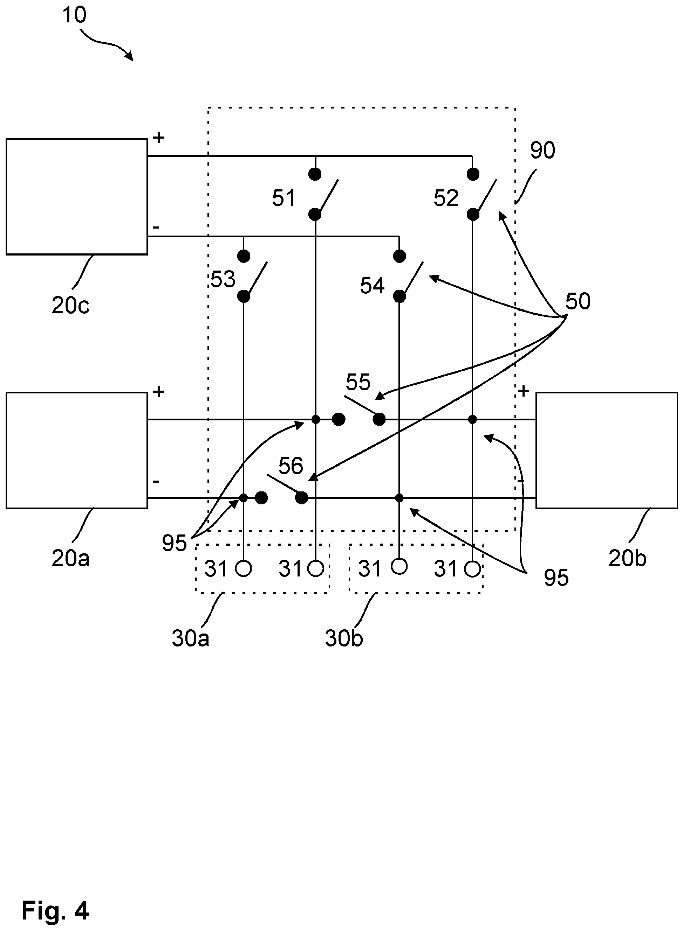

Entsprechend den Figuren 1 bis 5 (insbesondere dargestellt in Figur 4) kann die erfindungsgemäße Anordnung 10 die folgenden Komponenten aufweisen:
- wenigstens einen ersten und zweiten Ladepunkt 30a, 30b jeweils zur elektrischen Kopplung mit einem Elektrofahrzeug für einen elektrischen Ladevorgang,
   - wenigstens eine erste Leistungseinheit 20a für eine Bereitstellung einer elektrischen Ladeleistung,
   - eine Schaltanordnung 90, welche wenigstens die erste Leistungseinheit 20a mit den Ladepunkten 30a, 30b verschaltet, um die bereitgestellte Ladeleistung für den Ladevorgang auf die Ladepunkte 30a, 30b aufzuteilen.

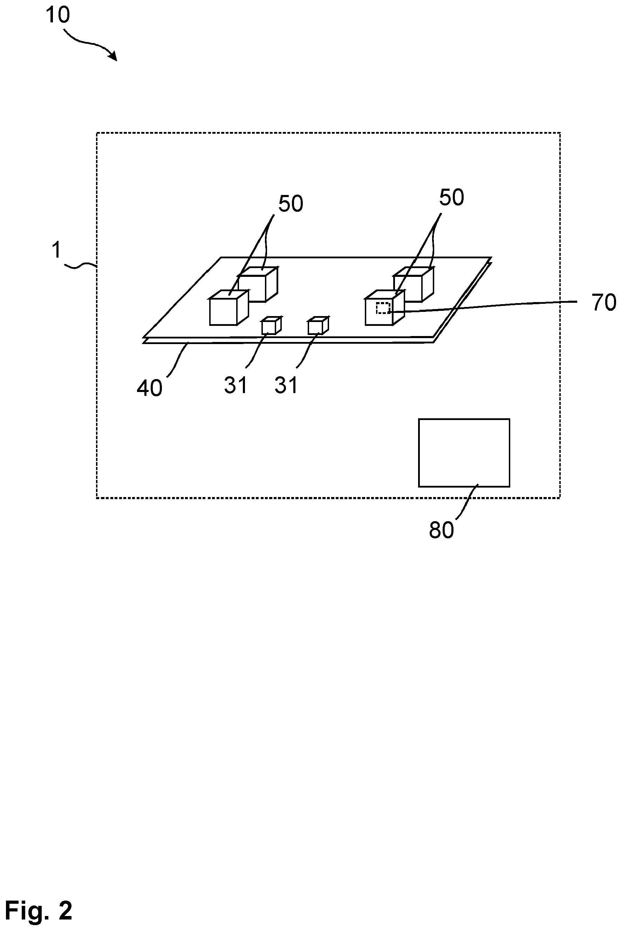

Ferner kann die Schaltanordnung 90 eine oder mehrere Schalteinheiten 50 aufweisen, wobei die Schaltanordnung 90 und die Schalteinheiten 50 entsprechend Figur 2 an einer Leiterplatte 40 zum Schalten eines durch die Leistungseinheit 20a bereitgestellten Ladestroms angeordnet und insbesondere elektrisch leitend befestigt sein können. Somit kann die Schaltanordnung 90 leiterplattenbasiert ausgeführt sein. Die Schaltanordnung 90 kann als eine Schaltmatrix 90 ausgeführt sein.

Gemäß Figur 4 kann die erste Leistungseinheit 20a über wenigstens eine elektrische Permanentverbindung 95 der Schaltanordnung 90 mit dem ersten Ladepunkt 30a (fest) verbunden sein, um die bereitgestellte Ladeleistung fest dem ersten Ladepunkt 30a zuzuteilen.

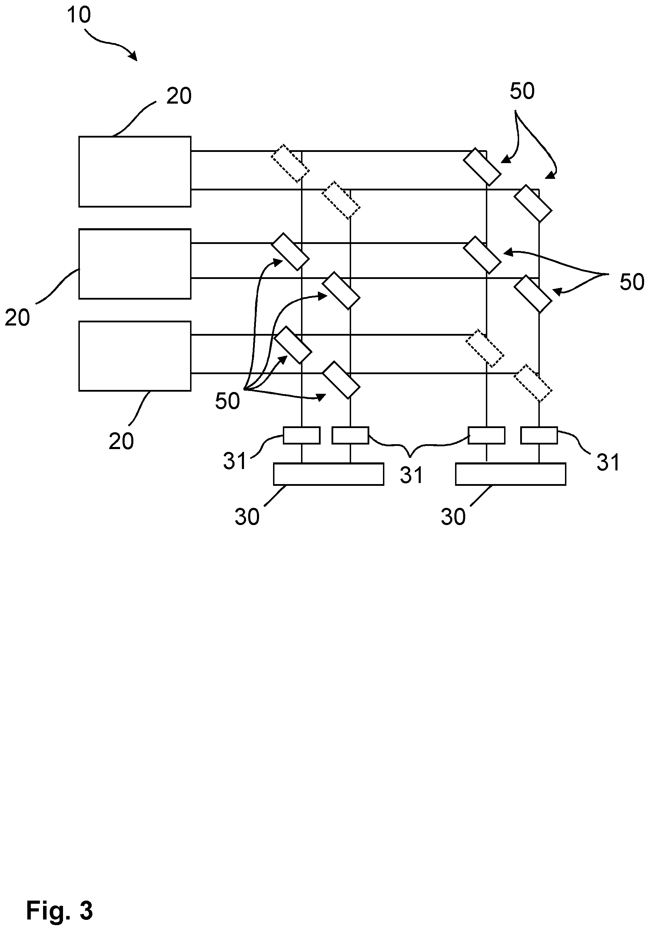

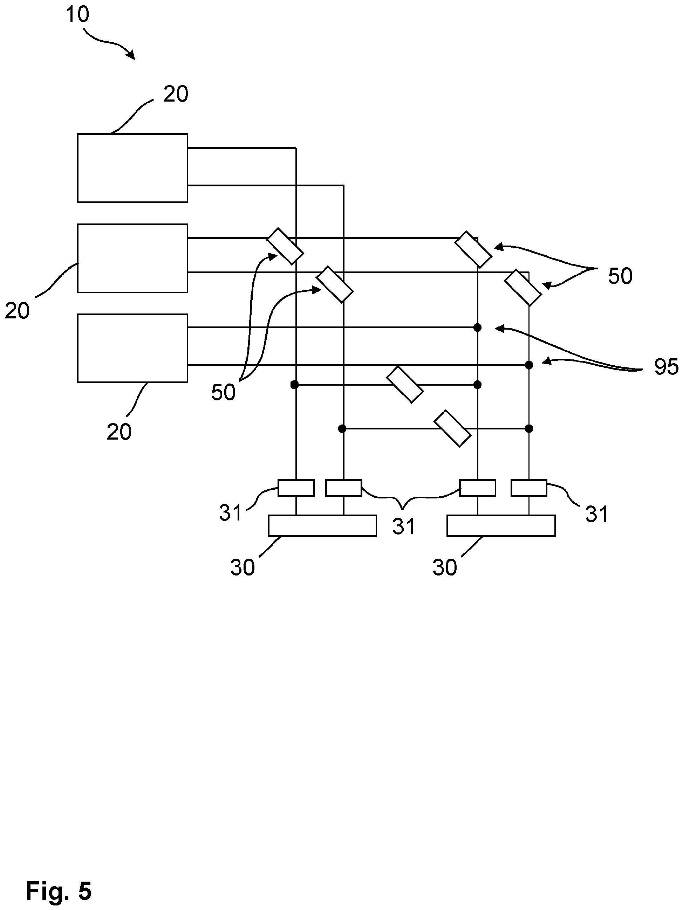

In Figur 1 ist visualisiert, dass die erfindungsgemäße Anordnung 10 auch weitere Leistungseinheiten 20 und weitere Ladepunkte 30 und entsprechend mehrere Schalteinheiten 50 aufweisen kann. Die in Fig. 1 gezeigte Ausbildung kann dabei für die weiteren Leistungseinheiten 20 mit weiteren Permanentverbindungen 95 erweitert werden. Dieses Prinzip ist auch in Figur 3 weiter visualisiert. Darin ist gezeigt, dass durch die Verwendung von Permanentverbindungen 95 auf einige (gestrichelt dargestellte) Schalteinheiten 50 verzichtet werden kann. In Figur 5 ist ein weiteres Beispiel für die Verwendung der Permanentverbindungen 95 gezeigt.

Darüber hinaus kann gemäß Figur 4 die erste Leistungseinheit 20a zusätzlich über wenigstens eine Schalteinheit 50 (beispielhaft gezeigt sind die Schalteinheiten 55 und 56) der Schaltanordnung 90 mit dem zweiten Ladepunkt 30b verbunden sein, um die bereitgestellte Ladeleistung schaltbar dem zweiten Ladepunkt 30b zuzuteilen. Auch dieses Prinzip ist in den Figuren 3 und 5 weiter verdeutlicht.

Durch die Schaltbilder der Figuren 1, 3, 4 und 5 ist erkennbar, dass - allgemeiner formuliert - die wenigstens eine Schalteinheit 50 die wenigstens eine Leistungseinheit 20 mit dem wenigstens einen Ladepunkt 30 elektrisch verbindet, um den bereitgestellten Ladestrom an das Elektrofahrzeug zu übertragen. Dabei ist es vorgesehen, dass auch mehrere Schalteinheiten 50 an der Leiterplatte 40 angeordnet sind, und eine Schaltmatrix 90 bilden. Dadurch ermöglicht die Schaltmatrix 90 eine dynamische Leistungsverteilung zwischen den Ladepunkten 30 in den Leistungsstufen der Nennleistung der Leistungseinheiten 20.

Es können grundsätzlich die in Figur 1 gezeigten Schalteinheiten 50 als Gleichspannungsschütze (DC-Schütze) realisiert werden. Dies würde zu einem diskreten Aufbau der Schaltmatrix 90 führen. Die hohen technischen Anforderungen an eine Lösung unter Verwendung von DC-Schützen resultieren allerdings auch in einem höheren Aufwand bei der Herstellung und Montage. Durch die erfindungsgemäß ebenfalls vorgeschlagene leiterplattenbasierte Ausführung der Schalteinheiten 50 können diese Nachteile zumindest reduziert werden. Insbesondere kann die Funktionsweise der Schaltmatrix 90, vorzugsweise Gleichstromschaltmatrix (DC-Schaltmatrix), leiterplattenbasiert unter Verwendung von Leiterplattenschalteinheiten, vorzugsweise Leiterplattenrelais, umgesetzt werden.

Vorzugsweise ist die erfindungsgemäße Anordnung 10 ferner als eine integrierte Baugruppe ausgeführt. Damit kann der Montageaufwand bei der Endmontage der Ladevorrichtung 1 deutlich reduziert und die Prozesssicherheit erhöht werden.

Außerdem kann es möglich sein, dass die Leistungseinheit 20 eine Leistungselektronik, insbesondere einen Gleichrichter, aufweist, um bei der Ladevorrichtung 1 in der Form einer Gleichstromladestation den Ladestrom in der Form von Gleichstrom bereitzustellen. In den Figuren 1 und 4 sind die Leistungseinheiten 20 mit den "+" und "-" -Anschlüssen dargestellt. Entsprechend können auch die Ladepunkte 30 "+" und "-" -Anschlüsse aufweisen. Die Schaltmatrix 90 kann korrespondierende "+" und "-" -Anschlüsse für die Leistungseinheiten 20 und die Ladepunkte 30 aufweisen, um darüber mit den entsprechenden Anschlüssen der Leistungseinheiten 20 bzw. Ladepunkte 30 verbunden zu werden. Ferner können Anschlüsse für die Ansteuerung der Schalteinheiten 50 durch eine Kontrollvorrichtung 80 und optionale Anschlüsse für Spiegelkontakte 70 zur Funktionsüberwachung vorgesehen sein.

Es können ferner mindestens zwei Ladepunkte 30 zum parallelen Aufladen mehrerer Elektrofahrzeuge vorgesehen sein, wobei die wenigstens eine Schalteinheit 50 dazu vorgesehen ist, den bereitgestellten Ladestrom auf die Ladepunkte 30 aufzuteilen. In Figur 1 ist veranschaulicht, dass die erfindungsgemäße Anordnung 10 auch durch weitere Ladepunkte 30, weitere Leistungseinheiten 20 und damit auch weitere Schalteinheiten 50 erweitert werden kann, um entsprechend weitere Elektrofahrzeuge parallel an der Ladevorrichtung 1 aufzuladen. Die Schaltmatrix 90 kann durch die zusätzlichen Schalteinheiten 50 in die Lage versetzt werden, die weiteren Ladepunkte 30 mit dem Ladestrom zu versorgen. Die Übertragung des Ladestroms an jeden der Ladepunkte 30 kann dabei ggf. durch die Schaltmatrix 90 schaltbar sein.

Die Figur 2 zeigt den Aufbau der erfindungsgemäßen Anordnung 10 als integrierte Baugruppe. Es ist veranschaulicht, dass die wenigstens eine Schalteinheit 50 jeweils als Leiterplattenrelais ausgebildet sein kann. Entsprechend können die Schalteinheiten 50 direkt auf der Leiterplatte 40 befestigt sein. Darüber hinaus können Anschlüsse der Leiterplatte 40 an eine Kontrollvorrichtung 80 vorgesehen sein.

In Figur 3 ist eine weitere Ausführung der erfindungsgemäßen Anordnung 10 gezeigt, bei welcher für jeden Ladepunkt 30 (beispielhaft vier) Schalteinheiten 50 zum Einsatz kommen. Dies ermöglicht es, den elektrischen Ladestrom, welcher von drei Leistungseinheiten 20 bereitgestellt wird, dynamisch an die Ladepunkte 30 zu verteilen und je nach Betriebszustand der Ladepunkte 30 die elektrische Leistung aufzuteilen. Die Ladepunkte 30 können jeweils zwei Anschlüsse 31 aufweisen, um einen Ladestecker mit dem Fahrzeug zum Aufladen zu verbinden, und damit die Ladepunkte 30 in den aktivierten Betriebszustand zu überführen. Nach Beendigung der Aufladung können die Ladepunkte 30 in den deaktivierten Betriebszustand überführt werden, z. B. durch ein Öffnen eines weiteren Schalters an den Anschlüssen 31.

Figur 4 zeigt beispielhaft, dass auch nur insgesamt sechs Schalteinheiten 51-56 vorgesehen sein können, also vier Schalteinheiten 51-56 pro Ladepunkt 30, um eine Schaltmatrix 90 zur Verteilung und Aufteilung des durch drei Leistungseinheiten 20 bereitgestellten Ladestroms auszubilden. Um dies zu ermöglichen, werden die Leistungseinheiten 20 teilweise direkt mit den Ladepunkten 30 über eine Permanentverbindung 95 elektrisch verbunden. Es kann allerdings außerhalb der Schaltmatrix 90 für jeden Ladepunkt 30 ein weiterer Schalter, z. B. an den Anschlüssen 31, vorgesehen sein, um die Ladepunkte 30 in den deaktivierten Betriebszustand zu überführen.

Es kann weiter möglich sein, dass eine zweite Leistungseinheit 20b vorgesehen ist, welche über wenigstens eine weitere elektrische Permanentverbindung 95 der Schaltanordnung 90 mit dem zweiten Ladepunkt 30b verbunden ist, um eine durch die zweite Leistungseinheit 20b bereitgestellte Ladeleistung fest dem zweiten Ladepunkt 30b zuzuteilen.

Außerdem kann es möglich sein, dass als die wenigstens eine Schalteinheit 50 mindestens oder genau zwei Schalteinheiten 55, 56 vorgesehen sind, welche den ersten Ladepunkt 30a mit dem zweiten Ladepunkt 30b verbinden, um die durch die erste Leistungseinheit 20a bereitgestellte Ladeleistung schaltbar dem zweiten Ladepunkt 30b zuzuteilen. Konkret kann dabei eine erste Schalteinheit 55 der Schalteinheiten 50 einen Anschluss 31 (bspw. einen "+" -Anschluss 31) des ersten Ladepunkts 30a mit einem korrespondierenden Anschluss 31 (also bspw. dem "+" -Anschluss 31) des zweiten Ladepunkts 30b verbinden. In entsprechender Weise kann die zweite Schalteinheit 56 der Schalteinheiten 50 einen anderen Anschluss 31 (bspw. den "-" -Anschluss 31) des ersten Ladepunkts 30a mit einem korrespondierenden Anschluss 31 (also bspw. dem "-" -Anschluss 31) des zweiten Ladepunkts 30b verbinden (s. Figur 4). Um die Leistung auf dem ersten Ladepunkt 30a zu erhöhen, insbesondere zu verdoppeln, kann dann über diese Schalteinheiten 55, 56 die zweite Leistungseinheit 20b auf den ersten Ladepunkt 30a zugeschaltet werden. Wenn der erste Ladepunkt 30a nicht in Betrieb ist, kann zur Erhöhung und insbesondere Verdoppelung der Leistung auf dem zweiten Ladepunkt 30b über diese Schalteinheiten 55, 56 die erste Leistungseinheit 20a auf den zweiten Ladepunkt 30b zugeschaltet werden. Durch die Verwendung der weiteren in Figur 4 (und entsprechend auch in Figur 5) gezeigten Schalteinheiten 50 kann jedem der Ladepunkte 30 die Summe der durch die Leistungseinheiten 20 bereitgestellten Ladeleistungen am Ausgang zur Verfügung gestellt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Ladevorrichtung

- 10: Anordnung

- 20: Leistungseinheit

- 20a: erste Leistungseinheit
- 20b: zweite Leistungseinheit
- 20c: dritte Leistungseinheit

- 30: Ladepunkt

- 30a: ersten Ladepunkt
- 30b: zweiten Ladepunkt
- 31: Anschluss

- 40: Leiterplatte

- 50: Schalteinheit
- 51-56: Schalteinheiten

- 70: Spiegelkontakt

- 80: Kontrollvorrichtung

- 90: Schaltmatrix, Schaltanordnung
- 95: Permanentverbindung

## Patentansprüche

1. Anordnung (10) zur Integration in eine elektrische Ladevorrichtung (1), aufweisend:
- wenigstens einen ersten und zweiten Ladepunkt (30a, 30b) jeweils zur elektrischen Kopplung mit einem Elektrofahrzeug für einen elektrischen Ladevorgang,
- wenigstens eine erste Leistungseinheit (20a) für eine Bereitstellung einer elektrischen Ladeleistung,
- eine Schaltanordnung (90), welche wenigstens die erste Leistungseinheit (20a) mit den Ladepunkten (30a, 30b) verschaltet, um die bereitgestellte Ladeleistung für den Ladevorgang auf die Ladepunkte (30a, 30b) aufzuteilen,
wobei die erste Leistungseinheit (20a) über wenigstens eine elektrische Permanentverbindung (95) der Schaltanordnung (90) mit dem ersten Ladepunkt (30a) verbunden ist, um die bereitgestellte Ladeleistung fest dem ersten Ladepunkt (30a) zuzuteilen,
wobei die erste Leistungseinheit (20a) zusätzlich über wenigstens eine Schalteinheit (50) der Schaltanordnung (90) mit dem zweiten Ladepunkt (30b) verbunden ist, um die bereitgestellte Ladeleistung schaltbar dem zweiten Ladepunkt (30b) zuzuteilen.

2. Anordnung (10) nach Anspruch 1,
**dadurch gekennzeichnet,**
**dass** als die wenigstens eine Schalteinheit (50) mindestens oder genau zwei Schalteinheiten (55, 56) vorgesehen sind, welche den ersten Ladepunkt (30a) mit dem zweiten Ladepunkt (30b) verbinden, um die durch die erste Leistungseinheit (20a) bereitgestellte Ladeleistung schaltbar dem zweiten Ladepunkt (30b) zuzuteilen.

3. Anordnung (10) nach Anspruch 1 oder 2,
**dadurch gekennzeichnet,**
**dass** eine zweite Leistungseinheit (20b) vorgesehen ist, welche über wenigstens eine weitere elektrische Permanentverbindung (95) der Schaltanordnung (90) mit dem zweiten Ladepunkt (30b) verbunden ist, um eine durch die zweite Leistungseinheit (20b) bereitgestellte Ladeleistung fest dem zweiten Ladepunkt (30b) zuzuteilen, wobei insbesondere dass die zweite Leistungseinheit (20b) zusätzlich über die wenigstens eine Schalteinheit (50) der Schaltanordnung (90) mit dem ersten Ladepunkt (30a) verbunden ist, um die durch die zweite Leistungseinheit (20b) bereitgestellte Ladeleistung schaltbar dem ersten Ladepunkt (30a) zusätzlich zur durch die erste Leistungseinheit (20a) bereitgestellten Ladeleistung zuzuteilen.

4. Anordnung (10) nach Anspruch 3,
**dadurch gekennzeichnet,**
**dass** die wenigstens eine Schalteinheit (50) der Schaltanordnung (90) dazu ausgeführt ist, die durch die erste Leistungseinheit (20a) bereitgestellte Ladeleistung schaltbar dem zweiten Ladepunkt (30b) zusätzlich zur durch die zweite Leistungseinheit (20b) bereitgestellten Ladeleistung zuzuteilen.

5. Anordnung (10) nach einem der Ansprüche 3 bis 4,
**dadurch gekennzeichnet,**
**dass** eine dritte Leistungseinheit (20c) vorgesehen ist, welche über wenigstens zwei weitere Schalteinheiten (50) der Schaltanordnung (90) mit dem ersten und zweiten Ladepunkt (30a, 30b) verbunden ist, um eine durch die dritte Leistungseinheit (20c) bereitgestellte Ladeleistung dem ersten Ladepunkt (30a) und zweiten Ladepunkt (30b) jeweils schaltbar zuzuteilen.

6. Anordnung (10) nach einem der vorhergehenden Ansprüche,
**dadurch gekennzeichnet,**
**dass** mindestens drei oder mindestens vier oder mindestens fünf oder mindestens sechs Ladepunkte (30) vorgesehen sind, wobei die Ladepunkte (30), jeweils über wenigstens eine elektrische Permanentverbindung (95) der Schaltanordnung (90), mit unterschiedlichen Leistungseinheiten (20) verbunden sind, um die jeweils durch die Leistungseinheiten (20) bereitgestellte Ladeleistung fest den jeweiligen Ladepunkten (30) zuzuteilen.

7. Anordnung (10) nach einem der vorhergehenden Ansprüche,
**dadurch gekennzeichnet,**
**dass** die jeweilige Leistungseinheit (20) eine Leistungselektronik, insbesondere einen Gleichrichter, aufweist, um bei der Ladevorrichtung (1) in der Form einer Gleichstromladestation einen Ladestrom in der Form von Gleichstrom bereitzustellen.

8. Anordnung (10) nach einem der vorhergehenden Ansprüche,
**dadurch gekennzeichnet,**
**dass** die Ladepunkte (30) zum parallelen Aufladen mehrerer Elektrofahrzeuge vorgesehen sind, wobei die Schaltanordnung (90) in der Form einer Schaltmatrix (90) dazu vorgesehen ist, die bereitgestellte Ladeleistung auf die Ladepunkte (30) aufzuteilen, wobei mindestens zwei oder mindestens drei oder mindestens vier Schalteinheiten (51-56) vorgesehen sind, um die Schaltmatrix (90) zur Verteilung und Aufteilung der bereitgestellten Ladeleistung auszubilden.

9. Anordnung (10) nach einem der vorhergehenden Ansprüche,
**dadurch gekennzeichnet,**
**dass** wenigstens eine Leiterplatte (40) vorgesehen ist, und die wenigstens eine Schalteinheit (50) jeweils an der Leiterplatte (40) zum Schalten eines durch die wenigstens eine Leistungseinheit (20) bereitgestellten Ladestroms angeordnet ist, und insbesondere jeweils als Leiterplattenrelais ausgebildet ist, und/oder dass eine Kontrollvorrichtung (80) zur Ansteuerung der wenigstens einen Schalteinheit (50) vorgesehen ist, und dazu ausgeführt ist, ein Schalten der wenigstens einen Schalteinheit (50) unter Last zu vermeiden, wobei die Schalteinheit (50) jeweils als Wechselstromrelais ausgebildet ist.

10. Anordnung (10) nach einem der vorhergehenden Ansprüche,
**dadurch gekennzeichnet,**
**dass** die wenigstens eine Schalteinheit (50) jeweils mindestens einen Spiegelkontakt (70) zur Funktionsüberwachung der Schalteinheit (50) aufweist.

11. Ladevorrichtung, aufweisend eine Anordnung (10) nach einem der vorhergehenden Ansprüche.

12. Ladevorrichtung (1) nach Anspruch 11,
**dadurch gekennzeichnet,**
**dass** die Ladevorrichtung (1) als eine Gleichstromschnellladestation ausgebildet ist, um ein Schnellladen durch einen Ladestrom in der Form von Gleichstrom für das Elektrofahrzeug bereitzustellen.

13. Ladevorrichtung (1) nach Anspruch 11 oder 12,
**dadurch gekennzeichnet,**
**dass** die Ladevorrichtung (1) als eine einzige stationäre Ladesäule ausgebildet ist, und mindestens zwei oder drei Leistungseinheiten (20) aufweist, um den Ladestrom über mehrere der Schalteinheiten (51-56) auf mindestens drei Ladepunkte (30) zur parallelen Aufladung jeweiliger Elektrofahrzeuge an der Ladevorrichtung (1) aufzuteilen, wobei die Schalteinheiten (51-56) jeweils als Relais ausgebildet sind, und unmittelbar mit der Leiterplatte (40) elektrisch verbunden sind.

14. Verfahren zur Aufladung wenigstens eines Elektrofahrzeuges, wobei die nachfolgenden Schritte durchgeführt werden:
- Bereitstellen wenigstens eines ersten und zweiten Ladepunkts (30a, 30b) jeweils zur elektrischen Kopplung mit einem Elektrofahrzeug für einen elektrischen Ladevorgang,
- Bereitstellen wenigstens einer ersten Leistungseinheit (20a) für eine Bereitstellung einer elektrischen Ladeleistung,
- Bereitstellen einer Schaltanordnung (90), welche wenigstens die erste Leistungseinheit (20a) mit den Ladepunkten (30a, 30b) verschaltet, um die bereitgestellte Ladeleistung für den Ladevorgang auf die Ladepunkte (30a, 30b) aufzuteilen,
- Durchführen einer Zuteilung der bereitgestellten Ladeleistung fest zu dem ersten Ladepunkt (30a),
- Durchführen einer Zuteilung der bereitgestellten Ladeleistung schaltbar zu dem zweiten Ladepunkt (30b).

15. Verfahren nach Anspruch 14,
**dadurch gekennzeichnet,**
**dass** eine Kontrollvorrichtung (80) vorgesehen ist, welche die schaltbare Zuteilung dadurch initiiert, dass die Kontrollvorrichtung (80) wenigstens eine Schalteinheit (50) der Schaltanordnung (90) schließt, wobei die Kontrollvorrichtung (80) zur Deaktivierung der Zuteilung einen durch die erste Leistungseinheit (20a) bereitgestellten Ladestrom zunächst abschaltet und erst dann die Schalteinheit (50) lastfrei öffnet
